# EUROPÄISCHE PATENTANMELDUNG

(11) **EP 1 489 276 A2**
(43) Veröffentlichungstag der Anmeldung: **22.12.2004**
(21) Anmeldenummer: 04004905.8
(22) Anmeldetag: 03.03.2004
(51) Int. Cl.: F01N 3/08, F01N 3/28

(54) **Verfahren zur Herstellung eines Katalysators sowie Anlage hierzu**

(30) Priorität: 20.06.2003 DE 10327668
(71) Anmelder: J. Eberspächer GmbH & Co. KG, 73730 Esslingen (DE)
(72) Erfinder: Alles, Markus, 66583 Spiesen (DE); Müller, Bernd, 57350 Scheeneck (FR)

(57) **Zusammenfassung**

Die Erfindung betrifft ein Verfahren zur Herstellung eines aus mindestens einem in einem Katalysatorgehäuse gehaltenen Monolithen gebildeten Katalysators, insbesondere eines Kraftfahrzeugkatalysators. Bei dem Verfahren wird auf die Außenumfangsfläche (38) des Monolithen (12) eine Lagermatte (14) aufgebracht und der Monolith (12) gemeinsam mit der Lagermatte (14) anschließend in das Katalysatorgehäuse eingeschoben. Zum Aufbringen der Lagermatte (14) auf den Monolithen (12) wird der Monolith (12) in Drehung versetzt, während die Lagermatte (14) tangential zugeführt und vom Monolithen (12) mitgenommen wird. Des weiteren betrifft die Erfindung eine Anlage zur Durchführung des erfindungsgemäßen Verfahrens.

## Beschreibung

Die Erfindung betrifft ein Verfahren nach dem Oberbegriff des Anspruchs 1 zur Herstellung eines aus mindestens einem in einem Katalysatorgehäuse gehaltenen Monolithen gebildeten Katalysators, insbesondere eines Kraftfahrzeugkatalysators. Ferner betrifft die Erfindung eine Anlage gemäß dem Oberbegriff des Anspruchs 10 zur Herstellung eines Katalysators.

Ein Verfahren der eingangs genannten Art zur Herstellung von Katalysatoren, insbesondere zur Herstellung von Kraftfahrzeugkatalysatoren, ist allgemein bekannt. Bei dem bekannten Verfahren wird zunächst durch Umformen und Schweißen ein Katalysatorgehäuse gefertigt, das entsprechend dem jeweiligen Einsatzzweck unterschiedlichste Querschnittsformen besitzen kann, beispielsweise rund, oval oder elliptisch. Beim anschließenden, sogenannten Canning wird mindestens ein aus einem porösen Keramikmaterial gefertigter, mit Katalysatormaterial beschichteter Monolith in das Katalysatorgehäuse eingeführt, dessen Querschnitt an die Querschnittsform des Katalysatorgehäuses angepaßt ist. In Abhängigkeit vom jeweiligen Anwendungsfall können gegebenenfalls auch zwei oder mehr Monolithen in das Katalysatorgehäuse eingeführt werden, die, sofern erforderlich, voneinander beabstandet im Katalysatorgehäuse angeordnet sind. Nach dem Canning wird das Katalysatorgehäuse beispielsweise durch Befestigen entsprechender Anschlußflansche und Deckel verschlossen.

Aufgrund des verwendeten Keramikmaterials ist der Monolith verhältnismäßig stoßempfindlich. Aus diesem Grund muß möglichst jegliche Bewegung des Monolithen relativ zum Katalysatorgehäuse verhindert werden, um einer Beschädigung des Monolithen vorzubeugen. Auch sollte der Monolith nicht durch Vibrationen des Katalysatorgehäuses, welche beispielsweise vom Fahrzeug an das Katalysatorgehäuse übertragen werden, oder durch pulsierende Abgasströme, die durch den Monolithen strömen, in Schwingung versetzt werden.

Um dies zu gewährleisten, ist es üblich, um die Außenumfangsfläche des Monolithen, d.h. die Fläche, welche rotationssymmetrisch zu der Körperachse des Monolithen verläuft, entlang der der Monolith ins Katalysatorgehäuse eingeführt wird, eine aus Glasfasern, Steinwolle oder einem ähnlichen hitzebeständigen und dämpfenden Material gefertigte Lagermatte zu befestigen. Die Lagermatte erfüllt im wesentlichen zwei Funktionen. Zum einen soll die Lagermatte den Monolithen unter Vorspannung im Katalysatorgehäuse halten, um eine Relativbewegung des Monolithen zum Katalysatorgehäuse zu verhindern. Zum anderen soll die Lagermatte am Katalysatorgehäuse wirkende Schwingungen gegenüber dem Monolithen wirksam dämpfen.

Zum Befestigen der Lagermatte am Monolithen wird der Monolith üblicherweise von Hand in die Lagermatte eingeschlagen und mit Hilfe eines Klebstoffes am Monolithen fixiert. Nachteilig an dieser Vorgehensweise ist jedoch, dass die Qualität der Positionierung der Lagermatte am Monolithen vom individuellen Geschick und der individuellen Leistungsfähigkeit des Werkers stark beeinflußt ist, der die Lagermatte am Monolithen befestigt.

So kann es beim Einschlagen des Monolithen in die Lagermatte zur Bildung von Falten kommen, die das Einführen des mit der Lagermatte versehenen Monolithen in das Katalysatorgehäuse erschweren oder sogar verhindern. Oder es kann an den aneinander anstoßenden beiden Seitenkanten der Lagermatte bei der Montage der Lagermatte ein Spalt bestehen bleiben, der bei im Katalysatorgehäuse eingesetztem Monolith einen Bypass bildet, entlang dem Abgas am Monolithen parallel vorbei unbehandelt durch das Katalysatorgehäuse strömen kann. Ferner ist eine dauerhafte Befestigung der Lagermatte mit Heißkleber nicht immer gewährleistet, so dass sich die Lagermatte insbesondere beim Canning lösen kann und der Fertigungsprozeß unterbrochen ist. Da die erforderliche Montagedauer bei einem derartigen Montageschritt erfahrungsgemäß stark schwankt - sie ist von der Geschicklichkeit und Geschwindigkeit des jeweiligen Werkes unmittelbar abhängig - ist ein Eintakten des Umwickelns in einen automatisierten Fertigungsablauf nur durch entsprechende Zwischenpuffer möglich. Trotz des Zwischenpufferns kann das Canning bei zu langer Montagedauer durch das vorgeordnete, von Hand erfolgende Einschlagen des Monolithen in die Lagermatte unterbrochen sein, die Canningmaschinen also kurzfristig nicht zum Einsatz kommen. Aufgrund der hohen Stückzahlen, mit denen Katalysatoren üblicherweise gefertigt werden, entstehen hierdurch hohe, zusätzlich Kosten.

Seit einiger Zeit kommen deshalb auch segmentierte Faltwerkzeuge zum Einsatz, die den Monolith automatisiert in die Lagermatte einschlagen sollen. Das Faltwerkzeug hat hierzu mehrere bogenförmig gestaltete, gelenkig miteinander verbundene Faltsegmente, welche aufeinanderfolgend aktiviert werden und die Lagermatte abschnittsweise um den Monolithen legen. Nachteilig an derartigen Faltwerkzeugen ist zum einen, dass die einzelnen Faltsegmente des Faltwerkzeuges mit einem entsprechend hohen Steuerungsaufwand einzeln anzusteuern und zu betätigen sind und das Faltwerkzeug demzufolge aufwendig gestaltet sein muß. Zum anderen wird die Lagermatte an dem Übergang zwischen zwei Faltsegmenten häufig geknickt, was gegebenenfalls zu Beschädigungen der Struktur der Lagermatte führt, die die Ausbildung der zuvor bereits angesprochenen Bypässe zur Folge haben können.

Es ist Aufgabe der Erfindung, ein Verfahren bzw. eine Anlage zur Herstellung eines aus mindestens einem in einem Katalysatorgehäuse gehaltenen Monolithen gebildeten Katalysators anzugeben, bei dem bzw. durch deren Einsatz die Lagermatte schonend und gleichmäßig an der Außenumfangsfläche des Monolithen angebracht werden kann.

Die Erfindung löst die Aufgabe durch ein Verfahren mit den Merkmalen nach Anspruch 1. Ferner löst die Erfindung die Aufgabe durch eine Anlage mit den Merkmalen nach Anspruch 10.

Bei der Erfindung wird die Lagermatte am Monolithen befestigt, indem die Lagermatte unter definierten Randbedingungen um den Monolithen gewickelt wird. Zu diesem Zweck wird der Monolith um seine Körperachse gedreht, während die Lagermatte der sich drehenden Außenumfangsfläche des Monolithen tangential zugeführt wird. Die Lagermatte wird dabei vom Monolithen mitgenommen, wobei in Abhängigkeit vom Drehmoment, mit dem der Monolith gedreht wird, einerseits, und der Kraft mit der die Lagermatte zugeführt wird, andererseits, sehr gezielt die Wickelkraft eingestellt werden kann, welche auf die Lagermatte beim Umwickeln des Monolithen einwirkt. Hierdurch ist ein besonders schonendes Aufwickeln der Lagermatte auf den Monolithen möglich, wobei gleichzeitig eine Faltenbildung verhindert ist, da durch die Zuführbewegung der Lagermatte und das am Monolithen angreifende Drehmoment an der Lagermatte eine über ihren quer zur Zuführrichtung verlaufenden Querschnitt wirkende, definierte, gleichmäßige Zugspannung angreift.

Da die Lagermatte über ihre Zuführlänge betrachtet eine begrenzte Elastizität besitzt, ist es ferner möglich, durch ein gezieltes aufeinander Abstimmen der Drehgeschwindigkeit des Monolithen und der Zuführgeschwindigkeit der Lagermatte die Zuführlänge der Lagermatte geringfügig so zu variieren, dass die Lagermatte immer exakt, ohne Bildung eines Spaltes auf den Monolithen gewickelt werden kann und die nach dem Aufwickeln der Lagermatte auf den Monolithen einander zugewandten, quer zur Wickelrichtung verlaufenden Längskanten der Lagermatte ordnungsgemäß aneinander anliegen. Auf diese Weise kann sehr gezielt die Bildung der zuvor beschriebenen Bypässe bei in das Katalysatorgehäuse eingeführtem Monolithen verhindert werden. Des weiteren können die aneinander anliegenden Seitenkanten durch eine Nut-und-Feder-Verbindung miteinander zusätzlich verrastet werden. Ferner können mit dem erfindungsgemäßen Verfahren auch zwei oder mehr Monolithen mit einer gemeinsamen Lagermatte umwickelt werden.

Weitere Vorteile der Erfindung ergeben sich aus der nachfolgenden Beschreibung, den Unteransprüchen und der Zeichnung.

So wird bei einer besonders bevorzugten Variante des erfindungsgemäßen Verfahrens vorgeschlagen, die Drehgeschwindigkeit des Monolithen und die Zuführgeschwindigkeit der Lagermatte derart aufeinander abzustimmen, dass die Lagermatte mit gleichmäßiger Vorspannung in Zuführrichtung gesehen auf den Monolithen aufgewickelt wird, wodurch erreicht wird, dass die Lagermatte äußerst gleichmäßig an der Außenumfangsfläche des Monolithen anliegt.

Zum Aufwickeln der Lagermatte auf den Monolithen wird ferner vorgeschlagen, den Monolithen in ein Wickelgehäuse einzuführen, in dem der Monolith in Drehung versetzt wird. Durch Verwendung des Wickelgehäuses wird erreicht, dass die tangential zugeführte Lagermatte während des gesamten Wickelvorganges in einer definierten Position zum Monolithen gehalten wird.

Bei dieser Verfahrensvariante ist es ferner von Vorteil, wenn die Lagermatte durch einen parallel zur Rotationsachse des Monolithen verlaufenden, am Wickelgehäuse ausgebildeten Spalt tangential zugeführt wird. Hierdurch ist sichergestellt, dass die Lagermatte bereits in der Anfangsphase dem Monolithen in einer definierten Lage zugeführt wird, damit der Monolith die Lagermatte ordnungsgemäß aufnehmen kann.

Des weiteren wird bei der das Wickelgehäuse verwendenden Verfahrensvariante vorgeschlagen, den Monolithen derart im Wickelgehäuse zu halten, dass die Drehachse des Monolithen mit der Symmetrielängsachse des Wickelgehäuses zumindest während des Drehens derart zusammenfällt, dass der Monolith über seine gesamte Außenumfangsfläche betrachtet einen zumindest annähernd konstanten radialen Abstand zur Innenumfangsfläche des Wickelgehäuses einhält. Durch den konstanten Abstand des Monolithen zur Innenumfangsfläche des Wickelgehäuses wird erreicht, dass die Lagermatte sowohl während des Einführens in das Wickelgehäuse als auch während des gesamten Wickelvorganges über ihre gesamte am Monolithen anliegende Fläche mit gleichmäßigem Anpressdruck von der Innenumfangsfläche des Wickelgehäuses gegen die Außenumfangsfläche des Monolithen gedrückt und gleichmäßig an diese angelegt wird.

Der radiale Abstand der Außenumfangsfläche des Monolithen zur Innenumfangsfläche des Wickelgehäuses ist dabei vorzugsweise so bemessen, dass die Lagermatte beim tangentialen Zuführen durch Reibung von dem sich drehenden Monolithen mitgenommen wird. Auf diese Weise kann auf zusätzliche Hilfsmittel, mit denen die Lagermatte beim Aufwickeln am Monolithen gehalten ist, verzichtet werden. Alternativ oder ergänzend zu dem durch Reibung verursachten Mitnehmen der Lagermatte ist es jedoch auch möglich, entweder den Monolithen oder die Lagermatte zumindest abschnittsweise mit Klebstoff zu versehen, so dass die Lagermatte in der Anfangsphase des Wickelvorganges am Monolithen anhaftet und durch die Klebeverbindung am Monolithen gehalten, mitgeführt wird.

Damit die Lagermatte den Monolithen unter einem definierten Preßsitz im Katalysatorgehäuse hält, wird bei einer bevorzugten Variante des erfindungsgemäßen Verfahren vorgeschlagen, die auf den Monolithen aufgewickelte Lagermatte über ihre Außenumfangsfläche gleichmäßig zu verpressen und den Monolithen mit der verpressten Lagermatte in das Katalysatorgehäuse einzuführen. Durch das Verpressen der Lagermatte wird erreicht, dass die Anordnung aus Monolith mit darum gewickelter Lagermatte ein vorgegebenes, definiertes Außenmaß aufweist, dass für einen ausreichenden Preßsitz der Anordnung an die Innenabmessung des Katalysatorkörpers angepaßt ist. Gleichzeitig werden durch das Verpressen eventuell bestehende Unebenheiten an der Lagermatte ausgeglichen.

Das Einschieben des mit der Lagermatte umwickelten Monolithen kann in einem unmittelbar folgenden Verfahrensschritt erfolgen. Alternativ, beispielsweise, wenn der mit der Lagermatte umwickelte Monolith von der Wickelstation zunächst zu einer anderen Arbeitsstation transportiert werden muß, ist es von Vorteil, die Lagermatte nach dem Umwickeln am Monolith zu sichern. Zum Sichern wird die Lagermatte vorzugsweise durch Ringe aus einem hitzebeständigen Material gehalten, in die der mit der Lagermatte umwickelte Monolith eingeschoben wird. Alternativ kann das Sichern der Lagermatte am Monolithen auch durch einen hitzebeständigen Klebstoff erfolgen.

Um einen definierten Sitz des mit der Lagermatte umwickelten Monolithen im Katalysatorgehäuse zu gewährleisten, wird ferner vorgeschlagen, das Katalysatorgehäuse vor dem Einschieben des Monolithen radial zumindest abschnittsweise definiert aufzuweiten. Das Katalysatorgehäuse wird dabei soweit aufgeweitet, dass das Innenmaß des Katalysatorgehäuses an das Außenmaß der aus dem mit der Lagermatte umwickelten Monolithen gebildeten Anordnung zur Ausbildung eines Preßsitzes, gegebenenfalls nach vorherigem Verpressen der Lagermatte, angepaßt ist. Vorzugsweise wird der jeweilige Monolith vor dem Umwickeln mit der Lagermatte vermessen und das Katalysatorgehäuse entsprechend den ermittelten Außenmaßen des Monolithen individuell aufgeweitet.

Gemäß einem weiteren Aspekt betrifft die Erfindung eine Anlage zur Herstellung eines aus mindestens einem in einem Katalysatorgehäuse gehaltenen Monolithen gebildeten Katalysators, die sich insbesondere zur Durchführung des zuvor beschriebenen erfindungsgemäßen Verfahrens eignet. Die erfindungsgemäße Anlage hat eine Station zum Umwickeln des Monolithen mit der Lagermatte sowie eine Einführstation zum Einschieben des mit der Lagermatte versehenen Monolithen in ein bereitgehaltenes Katalysatorgehäuse. Die Station zum Umwickeln des Monolithen hat ein Wickelgehäuse, an dem ein Zuführspalt zum tangentialen Zuführen der Lagermatte vorgesehen ist, sowie eine Spanneinrichtung zum Halten des Monolithen im Wickelgehäuse während des Umwickelns mit der Lagermatte, wobei die Spanneinrichtung mit einem Drehantrieb zum Drehen des Monolith um seine Längsachse versehen ist.

Bei einer bevorzugten Ausführungsform der erfindungsgemäßen Anlage hat die Spanneinrichtung zu beiden Seiten des Wickelgehäuses jeweils einen Stempel, von denen zumindest einer der beiden Stempel relativ zum anderen Stempel zum Einspannen des Monolithen zwischen den Stempeln axial verfahrbar und zumindest einer der beiden Stempel um die Verfahrachse drehbar anzutreiben ist. Des weiteren ist das Wickelgehäuse an seinen beiden Enden offen, damit die Spanneinrichtung in das Wickelgehäuse eingefahren und aus dem Wickelgehäuse herausgefahren werden kann. Der Vorteil dieser Ausführungsform besteht insbesondere darin, dass sowohl das Einspannen als auch das Drehen des Monolithen zum Umwickeln mit der Lagermatte automatisch erfolgen kann.

Des weiteren wird vorgeschlagen, die Station mit einer sich an den Zuführspalt des Wickelgehäuses anschließenden Zuführeinrichtung zum Zuführen der Lagermatte in das Wickelgehäuse auszustatten. Mit Hilfe der Zuführeinrichtung ist es möglich, die Lagermatte bezogen auf die Drehgeschwindigkeit des Monolithen mit einer definierten, vorzugsweise variablen Zuführgeschwindigkeit tangential zuzuführen, so dass an der Lagermatte, die vom Monolithen mitgeführt wird, durch das aufeinander Abstimmung der Drehgeschwindigkeit des Monolithen an die Zuführgeschwindigkeit der Lagermatte eine definierte Spannung in Zuführrichtung der Lagermatte einstellbar ist.

Um den Automatisierungsgrad der Anlage weiter zu erhöhen, wird bei der zuvor beschriebenen Ausführungsform der erfindungsgemäßen Anlage ferner vorgeschlagen, benachbart zur Zuführeinrichtung eine Handhabungseinrichtung zum Vereinzeln einer Lagermatte aus einem Lagermattenstapel und zum Fördern der Lagermatte in die Zuführeinrichtung vorzusehen.

Die erfindungsgemäße Anlage kann in eine getaktete und durch entsprechende Handhabungseinrichtungen miteinander verkettete Gesamtanlage zur Großserienherstellung von Katalysatoren eingebunden sein, bei der beispielsweise parallel zur Station zum Umwickeln des Monolithen eine Schweißstation für die Katalysatorgehäuse vorgesehen und die Einführstation der Station zum Umwickeln des Monolithen unmittelbar nachgeordnet ist. Alternativ ist es jedoch auch denkbar, die einzelnen Arbeitsstationen, beispielsweise die Station zum Umwickeln des Monolithen und die Einführstation, getrennt voneinander auszubilden. In einem derartigen Anwendungsfall ist es von besonderen Vorteil, zwischen der Station zum Umwickeln des Monolithen und der Einführstation eine Sicherungsstation zum Sichern der Lagermatte am Monolithen vorzugsehen, die vorzugsweise zum Halten von Ringen dient, in welche der mit der Lagermatte umwickelte Monolith zum Sichern einzuführen ist. Durch das Sichern der Lagermatte wird gewährleistet, dass sich die zuvor um den Monolithen gewickelte Lagermatte nicht löst oder ihre Position am Monolithen verändert, wenn der Monolith mit Lagermatte zur Einführstation transportiert wird.

Damit die Anordnung aus Monolith mit umwickelter Lagermatte ein definiertes Außenmaß hat, ist es ferner von Vorteil, wenn an der Einführstation eine Presseinrichtung zum Verpressen der an der Außenumfangsfläche am Monolithen gehaltenen Lagermatte vorgesehen ist, mit der die Lagermatte vor dem Einschieben in das Katalysatorgehäuse auf ein gewünschtes Außenmaß schonend verpresst werden kann.

Weitere Merkmale und Vorteile der Erfindung ergeben sich aus der nachfolgenden Beschreibung eines bevorzugten Ausführungsbeispiels unter Bezugnahme auf die beigefügte Zeichnung, in der:
- Fig. 1: eine schematische Draufsicht auf eine Wickelstation zum Umwickeln eines Monolithen mit einer Lagermatte zeigt, die in einer Anlage zur Herstellung eines Katalysators zum Einsatz kommt, und
- Fig. 2: eine schematische Vorderansicht des in der Anlage nach Fig. 1 benutzten Wickelgehäuses zeigt.

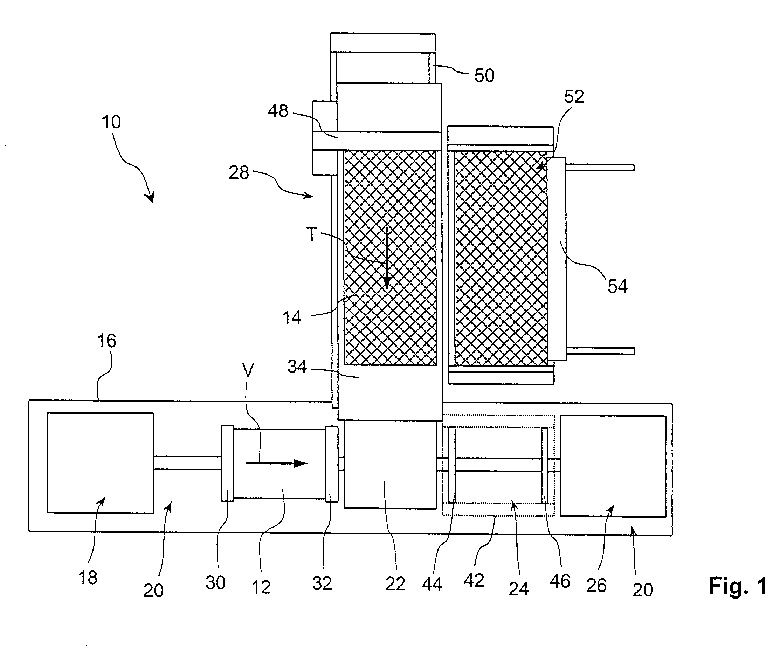

Fig. 1 zeigt in schematischer Draufsicht eine Wickelstation 10 zum Umwickeln eines Monolithen 12 mit einer Lagermatte 14 aus Glasfasern.

Die Wickelstation 10 hat ein Gestell 16, auf dem eine in der Fig. 1 links dargestellte erste Spanneinheit 18 einer Spanneinrichtung 20, ein Wickelgehäuse 22, eine Sicherungseinrichtung 24 sowie eine zweite Spanneinheit 26 der Spanneinrichtung 20 befestigt ist. Die aus den beiden Spanneinheiten 18 und 26 gebildete Spanneinrichtung 20 dient zum Halten, Drehen und zum Transport des Monolithen 12 durch die Station 10, wie später noch im Detail erläutert wird.

Benachbart zum Wickelgehäuse 22 ist eine Zuführeinrichtung 28 zum tangentialen Zuführen der Lagermatte 14 vorgesehen. Des weiteren ist eine aus Übersichtlichkeitsgründen nicht dargestellte Handhabungseinrichtung vorgesehen, mit der der Monolith 12 in die Station 10 eingesetzt und aus dieser entnommen wird.

Sowohl die Spanneinheit 18 als auch die Spanneinheit 26 der Spanneinrichtung 20 ist jeweils mit einem Stempel 30 bzw. 32 ausgestattet. Die Stempel 30 und 32 sind entlang einer gemeinsamen Verfahrachse V in Längsrichtung des Gestells 16 axial hin und her verfahrbar. Die Verfahrachse V der Stempel 30 und 32 fällt dabei mit der Symmetrieachse des im Querschnitt zumindest annähernd runden Wickelgehäuses 22 derart zusammen, dass der zwischen den Stempeln 30 und 32 zu haltende Monolith 12 von einer Aufnahmeposition, benachbart zum Wickelgehäuse 22, in eine Wickelposition im Wickelgehäuse 22 und von dort in eine Sicherungsposition in der Sicherungseinrichtung 26 verfahrbar ist, aus der die Handhabungseinrichtung den mit der Lagermatte 14 umwickelten Monolithen 12 der Station 10 schließlich entnimmt. Des weiteren ist zumindest einer der beiden Stempel 30 bzw. 32 mit einem Rotationsantrieb versehen, mit dem der zwischen den Stempeln 30 und 32 eingespannte etwa zylindrische Monolith 12 um seine Symmetrieachse zu drehen ist, wobei der andere drehbar gelagerte Stempel 32 bzw. 30 mitgeführt wird. Bei einer Variante der Spanneinrichtung 20 sind beide Stempel 30 und 32 synchronisiert zueinander angetrieben.

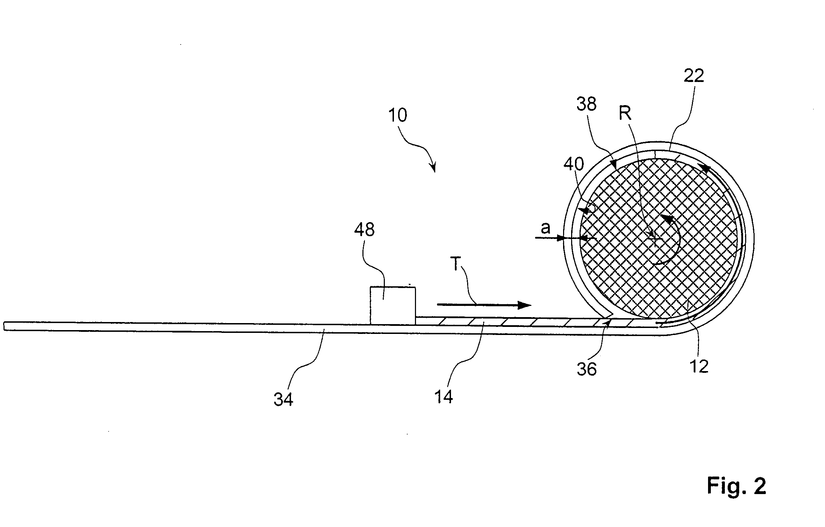

Wie Fig. 2 zeigt, in der eine Vorderansicht des Wickelgehäuses 22 zu sehen ist, geht das Wickelgehäuse 22 an seiner in Fig. 2 links dargestellten Seite in eine etwa horizontal verlaufende Auflage 34 der Zuführeinrichtung 28 über. Am Übergang des Wickelgehäuses 18 in die Auflage 34 ist ein parallel zur Längsrichtung des Wickelgehäuses 18 verlaufender Zuführspalt 36 ausgebildet, der zum Zuführen der Lagermatte 14 in das Wickelgehäuse 22 dient. Wie Fig. 2 ferner zeigt, halten und drehen die Stempel 30 und 32 der Spanneinrichtung 20 den Monolithen 12 so relativ zum Wickelgehäuse 22, dass die Drehachse R des Monolithen 12 mit der Symmetrieachse des Wickelgehäuses 22 zusammenfällt. Hierdurch wird der Monolith 12 mit seiner Außenumfangsfläche 38 mit etwa gleichbleibenden Abstand a zu Innenumfangsfläche 40 des Wickelgehäuses 22 gehalten.

Die Sicherungseinrichtung 24 hat ein Gehäuse 42 (gestrichelt dargestellt), das im Querschnitt an den Querschnitt des Wickelgehäuses 22 angepaßt ist und aus zwei Teilen besteht, so dass das Gehäuse 42 geöffnet werden kann. Am Gehäuse 42 sind zwei quer zur Verfahrachse V verlaufende Nuten 44 und 46 vorgesehen, die jeweils zur Aufnahme eines Ringes aus einem hitzebeständigen Material dienen. Die beiden als Sicherungselemente dienenden Ringe sind in ihrem Innendurchmesser an den Außendurchmesser des mit der Lagermatte 14 umwickelten Monolithen 12 angepaßt. Zum Sichern der Lagermatte 14 am Monolithen 12 wird der mit der Lagermatte 14 umwickelte Monolith 12 von den Stempeln 30 und 32 in die im Gehäuse 42 der Sicherungseinrichtung 24 gehaltenen, gleichfalls quer zur Verfahreachse V verlaufenden Ringe eingeführt, welche die Lagermatte 14 nach dem Öffnen des Gehäuses 42 am Monolithen 12 halten.

Die Zuführeinrichtung 28 hat einen in Längsrichtung der Auflage 34 in eine Zuführrichtung T hin und her beweglichen Schieber 48, welcher an einem an der Unterseite der Auflage 34 vorgesehenen Paar Führungen 50 geführt ist. Seitlich zur Auflage 34 ist ferner eine Stapeleinrichtung 52 vorgesehen, in der eine größere Anzahl an Lagermatten 14 aufeinandergestapelt für den Wickelvorgang bereitgehalten ist. An der Stapeleinrichtung 52 ist ein Vereinzeler 54 vorgesehen, mit dem jeweils die unterste Lagermatte 14 in der Stapeleinrichtung 52 auf die Auflage 34 gefördert wird.

Zu Beginn des Wickelvorganges wird die Station 10 in ihre Ausgangsstellung gefahren, in der die beiden Stempel 30 und 32 in die in Fig. 1 links dargestellte Aufnahmeposition bewegt sind. Die Stempel 30 und 32 sind dabei soweit auseinander gefahren, dass die nicht dargestellte Handhabungseinrichtung den zu umwickelnden Monolith 12 problemlos zwischen die Stempel 30 und 32 positionieren kann. Des weiteren fördert der Vereinzeler 54 eine einzelne Lagermatte 14 auf die Auflage 34. Anschließend wird der Schieber 48 soweit verfahren, dass die Vorderkante der Lagermatte 14 unmittelbar benachbart zum Zuführspalt 36 angeordnet ist.

Nachdem die Station 10 in ihre Ausgangsstellung bewegt ist, positioniert die nicht dargestellte Handhabungseinrichtung den Monolithen 12 zwischen die Stempel 30 und 32, die anschließend aufeinander zu bewegt werden und den Monolithen 12 zwischen sich spannen. Anschließend wird der eingespannte Monolith 12 von den beiden Stempeln 30 und 32 in die Wickelstellung im Wickelgehäuse 22 bewegt. Sobald sich der Monolith 12 in der Wickelstellung befindet, wird der Schieber 48 aktiviert, der die Lagermatte 14 in Zuführrichtung T in das Wickelgehäuse 22 schiebt, und der Monolith 12 von den Spanneinheiten 18 und 24 um die Drehachse R gedreht. Die Lagermatte 14 wird dann, sobald sie durch den Zuführspalt 36 in den Bereich zwischen der Außenoberfläche 38 des Monolithen 12 und der Innenoberfläche 40 des Wickelgehäuses eingeführt ist, aufgrund der verhältnismäßig hohen Rauhigkeit der Außenoberfläche 38 des Monolithen 12 mitgeführt, während sie an der Innenoberfläche 40 des Wickelgehäuses 22 entlanggleitet. Die Drehgeschwindigkeit des Monolithen 12 um die Drehachse R und die Zuführgeschwindigkeit der Lagermatte 14 in Zuführrichtung T werden dabei so aufeinander abgestimmt, dass die Lagermatte 14 auf der sich bewegenden Außenumfangsfläche 38 des Monolithen 12 aufliegt. Der Schieber 48 führt dabei die Lagermatte 14 kontinuierlich nach, wobei durch Verändern der Zuführgeschwindigkeit, mit der die Lagermatte 14 in das Wickelgehäuse 22 vom Schieber 48 eingeschoben wird, die Zugspannung, die an der Lagermatte 14 in deren in Zuführrichtung T verlaufenden Längsrichtung wirkt, begrenzt variiert werden kann.

Sobald die Lagermatte 14 vollständig in das Wickelgehäuse 22 eingezogen worden ist, wird die Drehgeschwindigkeit des Monolithen 12 verlangsamt und die am Monolithen 12 gehaltene Lagermatte 14 in eine Stellung gedreht, in der die Lagermatte 14 mit ihren parallel zur Drehachse R verlaufenden Seitenkanten aneinander stößt bzw. auf Stoß liegt.

Nachdem die Lagermatte 14 ordnungsgemäß auf den Monolithen 12 aufgewickelt worden ist, werden die Spanneinrichtungen 18 und 24 angehalten und in Richtung Sicherungseinrichtung 26 bewegt. Die Stempel 30 und 32 fördern den mit der Lagermatte 14 umwickelten Monolithen 12 in das geschlossene Gehäuse 42 der Sicherungseinrichtung 26. In die Nuten 44 und 46 wurden zuvor bei geöffnetem Gehäuse 42 Ringe eingelegt, mit denen die Lagermatte 14 in ihrer Lage relativ zum Monolithen 12 gesichert werden soll. Zum Sichern wird der mit der Lagermatte 14 umwickelte Monolith 12 durch die im Gehäuse 42 in den Nuten 44 und 46 gehaltenen Ringe geführt, wobei sich die Lagermatte 14 während des Einführens in das Gehäuse 42 nicht vom Monolithen 12 lösen kann, da das geschlossene Gehäuse 42 der Sicherungseinrichtung 26 zumindest annähernd die gleiche Querschnittsgröße und -form hat wie der Monolith 12, wie zuvor bereits erläutert wurde. Sobald der mit der Lagermatte 14 umwickelte Monolith 12 vollständig in das Gehäuse 42 eingeführt worden ist, sich also in seiner Sicherungsposition befindet, wird das geteilt ausgebildete Gehäuse 42 der Sicherungseinrichtung 26 geöffnet und die Handhabungsvorrichtung entnimmt der Sicherungseinrichtung 26 den fertig gewickelten Monolithen 12 mit daran durch die Ringe gesicherter Lagermatte 14. Danach wird die Station 10 wieder in ihre Ausgangsstellung gefahren.

Der so mit der Lagermatte 14 umwickelte Monolith 12 wird anschließend der Preßeinrichtung einer Einführstation (nicht dargestellt) zugeführt, in der die am Monolithen 12 gehaltene Lagermatte 14 auf ein vorgegebenen Maß zusammengepreßt wird. Anschließend wird der so vorbereitete und gepreßte Monolith 12 mit daran befestigter Lagermatte 14 in das bereitgehaltene Katalysatorgehäuse eingeschoben.

Bei dem zuvor beschriebenen Ausführungsbeispiel ist die Station 10 als eigenständige Prozeßstation ausgebildet, die nicht unmittelbar in eine Produktionsstraße eingebunden ist. Es ist jedoch auch denkbar, die Station 10 in den Prozeßablauf einer Produktionsstraße einzubinden. In diesem Fall kann die Sicherungseinrichtung 26 entfallen und der fertig mit einer Lagermatte 14 umwickelte Monolith 12 ohne Sicherung direkt in die Preßeinrichtung der Einführstation transportiert werden.

Des weiteren ist es denkbar, das Wickelgehäuses 22 geteilt auszubilden, damit mehrere Monolithen 12 mit einer gemeinsame Lagermatte 14 im Wickelgehäuse 22 umwickelt werden können.

### Bezugszeichenliste:

- 10: Wickelstation
- 12: Monolith
- 14: Lagermatte
- 16: Gestell
- 18: erste Spanneinheit
- 20: Spanneinrichtung
- 22: Wickelgehäuse
- 24: Sicherungseinrichtung
- 26: zweite Spanneinheit
- 28: Zuführeinrichtung
- 30: Stempel
- 32: Stempel
- 34: Auflage
- 36: Zuführspalt
- 38: Außenumfangsfläche
- 40: Innenumfangsfläche
- 42: Gehäuse
- 44: Nut
- 46: Nut
- 48: Schieber
- 50: Paar Führungen
- 52: Stapeleinrichtung
- 54: Vereinzeler
- R: Drehrichtung
- T: Zuführrichtung
- V: Verfahrachse

## Patentansprüche

1. Verfahren zur Herstellung eines aus mindestens einem in einem Katalysatorgehäuse gehaltenen Monolithen gebildeten Katalysators, insbesondere eines Kraftfahrzeugkatalysators, wobei bei dem Verfahren
zunächst auf die Außenumfangsfläche (38) des Monolithen (12) eine Lagermatte (14) aufgebracht und der Monolith (12) anschließend gemeinsam mit der Lagermatte (14) in das Katalysatorgehäuse eingeschoben wird,
**dadurch gekennzeichnet,**
**dass** der Monolith (12) zum Aufbringen der Lagermatte (14) auf die Umfangsfläche (38) in seine Umfangsrichtung in Drehung versetzt wird, während die Lagermatte (14) tangential zugeführt und vom Monolithen (12) mitgenommen wird.

2. Verfahren nach Anspruch 1, **dadurch gekennzeichnet, dass** die Drehgeschwindigkeit des Monolithen (12) und die Zuführgeschwindigkeit der Lagermatte (14) derart aufeinander abgestimmt werden, dass die Lagermatte (12) mit vorzugsweise gleichmäßiger Zugspannung in Zuführrichtung (T) gesehen auf den Monolithen (12) aufgewickelt wird.

3. Verfahren nach Anspruch 1 oder 2, **dadurch gekennzeichnet, dass** der Monolith (12) zum Aufbringen der Lagermatte (14) in ein Wickelgehäuse (22) eingeführt wird, in dem der Monolith (12) in Drehung versetzt wird.

4. Verfahren nach Anspruch 3, **dadurch gekennzeichnet, dass** die Lagermatte (14) durch einen parallel zur Symmetrieachse verlaufenden, am Wickelgehäuse (22) ausgebildeten Spalt (36) tangential zugeführt wird.

5. Verfahren nach Anspruch 3 oder 4, **dadurch gekennzeichnet, dass** die Drehachse (R) des Monolithen (12) mit der Symmetrielängsachse des Wickelgehäuses (22) zumindest während des Drehens derart zusammenfällt, dass der Monolith (12) über seine gesamte Außenumfangsfläche (38) betrachtet einen zumindest annähernd konstanten radialen Abstand (a) zur Innenumfangsfläche (40) des Wickelgehäuses (22) einhält.

6. Verfahren nach Anspruch 5, **dadurch gekennzeichnet, dass** der radiale Abstand (a) der Außenumfangsfläche (38) des Monolithen (12) zur Innenumfangsfläche (40) des Wickelgehäuses (22) so bemessen ist, dass die Lagermatte (14) beim tangentialen Zuführen durch Reibung von dem sich drehenden Monolithen (12) mitgenommen wird.

7. Verfahren nach einem der vorhergehenden Ansprüche, **dadurch gekennzeichnet, dass** die auf den Monolithen (12) aufgewickelte Lagermatte (14) über ihre Außenumfangsfläche gleichmäßig verpresst und der Monolith (12) mit der verpressten Lagermatte (14) in das Katalysatorgehäuse eingeführt wird.

8. Verfahren nach einem der vorhergehenden Ansprüche, **dadurch gekennzeichnet, dass** die Lagermatte (14) nach dem Umwickeln am Monolith (12), vorzugsweise durch Ringe, gesichert wird.

9. Verfahren nach einem der vorhergehenden Ansprüche, **dadurch gekennzeichnet, dass** das Katalysatorgehäuse vor dem Einschieben des Monolithen (12) zumindest abschnittsweise radial aufgeweitet wird.

10. Anlage zur Herstellung eines aus mindestens einem in einem Katalysatorgehäuse gehaltenen Monolithen gebildeten Katalysators, insbesondere zur Durchführung des Verfahrens nach einem der vorhergehenden Ansprüche 1 bis 9, mit
einer Station (10) zum Aufbringen einer Lagermatte (14) auf die Außenumfangsfläche (38) des Monolithen (12) und
einer Einführstation zum Einschieben des mit der Lagermatte (14) versehenen Monolithen (12) in das bereitgehaltene Katalysatorgehäuse,
**dadurch gekennzeichnet,**
**dass** die Station (10) zum Aufbringen der Lagermatte (14) ein Wickelgehäuse (22), an dem ein Zuführspalt (36) zum tangentialen Zuführen der Lagermatte (14) vorgesehen ist, sowie eine Spanneinrichtung (20) zum Halten des Monolithen (12) im Wickelgehäuse (22) während des Umwickelns mit der Lagermatte (14) aufweist, wobei die Spanneinrichtung (20) mit einem Drehantrieb (18, 26) zum Drehen des Monolith (12) um seine Längsachse (R) versehen ist.

11. Anlage nach Anspruch 10, **dadurch gekennzeichnet, dass** das Wickelgehäuse (22) an beiden Enden offen ist, und dass die Spanneinrichtung (20) zu beiden Seiten des Wickelgehäuses (22) jeweils einen Stempel (30, 32) hat, von denen zumindest einer der beiden Stempel (30, 32) relativ zum anderen Stempel (32, 30) zum Einspannen des Monolithen (12) zwischen den Stempeln (30, 32) axial verfahrbar ist und zumindest einer der beiden Stempel (30, 32) um die Verfahrachse drehbar anzutreiben ist.

12. Anlage nach Anspruch 10 oder 11, **dadurch gekennzeichnet**, die Station (10) eine sich an den Zuführspalt (36) des Wickelgehäuses (22) anschließende Zuführeinrichtung (28) zum Zuführen der Lagermatte (14) in das Wickelgehäuse (22) aufweist.

13. Anlage nach Anspruch 12, **dadurch gekennzeichnet, dass** benachbart zur Zuführeinrichtung (28) eine Handhabungseinrichtung (54) zum Vereinzeln einer Lagermatte (14) aus einem Lagermattenstapel (52) und zum Fördern der Lagermatte (14) in die Zuführeinrichtung (28) angeordnet ist.

14. Anlage nach einem der Ansprüche 10 bis 13, **dadurch gekennzeichnet, dass** zwischen der Station (10) zum Aufbringen der Lagermatte (14) und der Einführstation eine Sicherungsstation (24) zum Sichern der Lagermatte (14) am Monolithen (12) angeordnet ist, die vorzugsweise zum Halten von Ringen dient, in welche der mit der Lagermatte umwickelte Monolith zum Sichern einzuführen ist.

15. Anlage nach einem der Ansprüche 10 bis 14, **dadurch gekennzeichnet, dass** an der Einführstation eine Presseinrichtung zum Verpressen der an der Außenumfangsfläche (38) am Monolithen (12) gehaltenen Lagermatte (14) vor dem Einschieben in das Katalysatorgehäuse vorgesehen ist.
